Europäisches Patentamt

European Patent Office

Office européen des brevets

(19)

(11) **EP 1 299 782 B1**

(12) **EUROPÄISCHE PATENTSCHRIFT**

(45) Veröffentlichungstag und Bekanntmachung des Hinweises auf die Patenterteilung:
**14.09.2005 Patentblatt 2005/37**

(21) Anmeldenummer: **01962820.5**

(22) Anmeldetag: **03.07.2001**

(51) Int Cl.⁷: $G05B\ 19/4061$

(86) Internationale Anmeldenummer:
**PCT/EP2001/007578**

(87) Internationale Veröffentlichungsnummer:
**WO 2002/006615 (24.01.2002 Gazette 2002/04)**

(54) **VERFAHREN ZUM BETREIBEN EINER ELEKTRISCHEN ANTRIEBSEINHEIT**

METHOD FOR OPERATING AN ELECTRICAL DRIVE UNIT

PROCEDE POUR LE FONCTIONNEMENT D'UNE UNITE D'ENTRAINEMENT ELECTRIQUE

(84) Benannte Vertragsstaaten:
**AT BE CH CY DE DK ES FI FR GB GR IE IT LI LU MC NL PT SE TR**

(30) Priorität: **13.07.2000 DE 10034014**

(43) Veröffentlichungstag der Anmeldung:
**09.04.2003 Patentblatt 2003/15**

(73) Patentinhaber: **Conti Temic microelectronic GmbH**
**90411 Nürnberg (DE)**

(72) Erfinder:
 • **KESSLER, Erwin**
  **88348 Saulgau (DE)**
 • **SCHULTER, Wolfgang**
  **88709 Meersburg (DE)**

(56) Entgegenhaltungen:
**DE-A- 19 633 941**    **DE-A- 19 638 781**
**DE-A- 19 838 144**    **US-A- 5 734 245**

**Beschreibung**

Elektrische Antriebseinheiten werden in vielfältigen Anwendungsgebieten zur Realisierung mittels Fremdkraft durchgeführter Betätigungsvorgänge von beweglichen Teilen eingesetzt; beispielsweise werden bei Kraftfahrzeugen durch elektrische Antriebseinheiten verschiedene bewegliche Teile betätigt (Stellelemente), bsp. Sitze, Seitenfenster, Schiebedächer, Schiebetüren etc. Elektrische Antriebseinheiten bestehen aus einem Elektromotor (bsp. einem Gleichstrommotor) zur Erzeugung und Bereitstellung von elektrischer Antriebsleistung, aus einem Getriebe zur Übersetzung der Bewegung des Elektromotors, aus einer Vorrichtung zur mechanischen Ankopplung bzw. Anpassung des Elektromotors bzw. Getriebes an das bewegliche Teil (Stellelement), insbesondere zur Umsetzung der Rotationsbewegung des Elektromotors in eine Linearbewegung, sowie aus einem Elektronikmodul zur Ansteuerung und Überwachung des Elektromotors (beispielsweise zur Drehzahl- und Leistungsregelung des Elektromotors). Die für die elektrische Antriebseinheit benötigte Antriebskraft liegt i.a. zwischen 100 N und 500 N.
Zur Erhöhung des Komforts für den Benutzer bzw. Bediener sind die mittels Fremdkraft (elektromotorisch) durchgeführten Betätigungsvorgänge oftmals automatisch durchführbar: der Benutzer bzw. Bediener muß nunmehr lediglich den Betätigungsvorgang initiieren und kann sich während des (voll)automatisch ablaufenden Betätigungsvorgangs anderweitigen Aktivitäten widmen. Jedoch besteht bei automatisch ablaufenden Betätigungsvorgängen (insbesondere bei automatisch ablaufenden Schließvorgängen, d.h. bei der Realisierung von Automatikfunktionen für den Schließvorgang), insbesondere bei durch den Benutzer bzw. Bediener nicht weiter überwachten oder vom Benutzer bzw. Bediener aus größerer Entfernung (per Fernbedienung) ausgelösten automatisch ablaufenden Betätigungsvorgängen, die Gefahr des Einklemmens von Körperteilen oder Gegenständen. Aufgrund des hiermit verbundenen erheblichen Verletzungsrisikos wurden bereits Verordnungen erlassen, die bsp. automatisch ablaufende Schließvorgänge nur unter bestimmten Voraussetzungen erlauben, und damit einen gewissen Einklemmschutz gewährleisten sollen; insbesondere werden das Anwendungsgebiet (bsp. Fensterheber und Schiebedächer von Kraftfahrzeugen), die maximal zulässige Klemmkraft (bsp. 100 N), die zur Überprüfung der Wirksamkeit des Einklemmschutzes zu verwendenden Prüfkörper (bsp. deren Eigenschaften wie Elastizität, Federrate und Geometrie) und die Randbedingungen, unter denen der Einklemmschutz wirksam werden muß (bei Kraftfahrzeugen bsp. abgezogener Zündschlüssel und automatisch ablaufender Schließvorgang) festgelegt. Das Dokument DE 196 38 781 A1 zeigt einen Stellantrieb mit Einklemmschutz.

Zur Realisierung eines Einklemmschutzes können direkte Verfahren oder indirekte Verfahren eingesetzt werden: bei direkten Verfahren wird der vom beweglichen Teil zurückgelegte Betätigungsweg selbst (insbesondere eine zu verschließende Öffnung) im Hinblick auf potentielle Hindernisse überwacht (beispielsweise durch Anbringen von Schaltleisten oder durch optische Mittel), was jedoch mit hohen Kosten verbunden und störanfällig ist; bei indirekten Verfahren wird die beim Einklemmen entstehende Klemmkraft überwacht, indem beim Überschreiten eines vorgegebenen Grenzwerts (Auslöseschwellwerts) für die Antriebskraft (ab einer bestimmten Überschußkraft) ein Einklemmen angenommen wird; nach dem Erkennen eines Einklemmens werden bestimmte Maßnahmen initiiert, insbesondere kann die elektrische Antriebseinheit (der Elektromotor) reversiert oder abgeschaltet werden. Die bei den indirekten Verfahren des Einklemmschutzes ausgewertete Klemmkraft bzw. Überschußkraft kann entweder direkt bestimmt werden (was wegen der hierfür benötigten Sensoren, beispielsweise Kraftsensoren oder Drehmomentsensoren, recht kostspielig ist) oder indirekt durch Erfassung und Auswertung der Meßwerte mindestens einer für die Belastung des Elektromotors bzw. des aktuell vom Elektromotor abgegebenen Drehmoments charakteristischen. Motorkenngröße (beispielsweise durch Auswertung der Antriebsdrehzahl und/oder Stromaufnahme und/oder Leistungsaufnahme und/oder Energieaufnahme des Elektromotors), d.h. durch Bewertung der Auswirkung der Klemmkraft auf den Elektromotor der elektrischen Antriebseinheit (Änderung der Antriebslast).

Bei dieser (aus Kostengründen gebräuchlichen) indirekten Bestimmung der Klemmkraft ist es aus der DE 44 42 1 71 A1 bekannt, zur Überwachung eines Systems mit einem elektromotorischen Antrieb die Reibungskraft des Antriebs bei der Bestimmung der Klemmkraft während eines Öffnungsvorgangs oder Schließvorgangs zu berücksichtigen. Die Reibungskraft wird zu einem Zeitpunkt des Öffnungsvorgangs oder Schließvorgangs ermittelt, bei dem noch kein Einklemmen und damit keine Klemmkraft auftritt, wobei die Bestimmung der Reibungskraft entweder indirekt aus den Motorkenngrößen Motorstrom (Ankerstrom) und/oder Motorspannung und/oder Motordrehzahl erfolgen kann oder direkt durch geeignete Sensoren am Elektromotor. Probleme entstehen jedoch durch die starke Abhängigkeit der Antriebskraft von Temperatureinflüssen und Alterungseinflüssen und durch die NichtReproduzierbarkeit des Reibverhaltens der elektrischen Antriebseinheit; hiermit verbunden ist somit auch eine starke Abhängigkeit der Klemmkraft bzw. Überschußkraft von Temperaturschwankungen, Alterungserscheinungen und Serienstreuungen etc., so daß aus Sicherheitsgründen (Vermeidung fehlerhafter Bewertungen hinsichtlich des Einklemmens) der Auslöseschwellwert für die Klemmkraft mindestens so hoch gelegt werden muß wie der nicht reproduzierbare Anteil der Antriebskraft und damit der Reibkraft im schlechtesten Falle ("worst case" Betrachtung). Da aber andererseits aufgrund der Trägheit der elektrischen Antriebseinheit, insbesondere der Trägheit des Elektromotors, der Elektromotor nach dem Erkennen eines Einklemmens (und dem Abschalten oder der Reversierung der elektrischen Antriebseinheit als Maßnahme gegen eine weitere Krafterhöhung) noch eine gewisse Zeit in die ursprüngliche Bewegungsrichtung weiterläuft, muß zur Vermeidung des Überschreitens einer bestimmten maximalen Klemmkraft bereits ein geringerer Kraftüberschuß als diese maximale Klemmkraft detektiert und als Einklemmen bewertet werden (bsp. muß eine Überschußkraft in der Größenordnung von 50 N detektiert werden, um eine maximale Klemmkraft von 100 N nicht zu überschreiten). Um einen Einklemmschutz unter diesen beiden konträren Randbedingungen sicher zu gewährleisten, ist lediglich ein stark eingeschränkter Einsatzbereich der elektrischen Antriebseinheit möglich.

Der Erfindung liegt die Aufgabe zugrunde, ein Verfahren zum Betrieb einer elektrischen Antriebseinheit anzugeben, das demgegenüber vorteilhafte Eigenschaften aufweist, insbesondere mit dem ein Einklemmschutz ohne unnötige Einschränkungen des Einsatzbereichs der elektrischen Antriebseinheit auf einfache Weise und mit geringen Kosten bei dennoch hoher Zuverlässigkeit erreicht werden kann.

Diese Aufgabe wird erfindungsgemäß durch die Merkmale im Kennzeichen des Patentanspruchs 1 gelöst.

Vorteilhafte Weiterbildungen des Verfahrens sind Bestandteil der weiteren Patentansprüche.

Der Erfindung liegt die Erkenntnis zugrunde, daß ein effizienter Einklemmschutz bei einer elektrischen Antriebseinheit (bei einem elektromotorischen Antrieb) implementiert wird, wenn der Auslöseschwellwert als Kriterium für das Erkennen eines Einklemmens unter Berücksichtigung des nicht reproduzierbaren Anteils der Reibkraft vorgegeben wird. Demnach werden zur Überwachung der elektrischen Antriebseinheit auf ein potentielles Einklemmen hin Reibkraftprofile als Verlauf der Reibkraft während des Betätigungsvorgangs ermittelt (entweder durch direkte Messung der Kräfte oder durch indirekte Bestimmung anhand der Motorkenngrößen Motorstrom und/oder Motorspannung und/oder Motordrehzahl bzw. Periodendauer) und diese Reibkraftprofile von verschiedenen nacheinander ablaufenden Betätigungsvorgängen in Form eines Gütemaßes zueinander in Beziehung gesetzt; der Anteil der Reibkraft und damit der Klemmkraft kann somit genauer erfaßt werden, so daß der Auslöseschwellwert abhängig von diesem Gütemaß auf geringere Werte eingestellt werden kann. Der Auslöseschwellwert kann (abhängig vom Gütemaß) hierbei entweder global (positionsunabhängig, d.h. unabhängig vom Betätigungsweg) beeinflußt oder unter Berücksichtigung des Betätigungswegs positionsabhängig angepaßt werden (bsp. können bestimmte, insbesondere problematische Bereiche des Betätigungswegs ausgeklammert werden).

Zur Ermittlung des die Reproduzierbarkeit der Reibung der elektrischen Antriebseinheit (des Reibkraftverlaufs) angebenden Gütemaßes wird (typischerweise bei jedem Betätigungsvorgang und insbesondere bei einer indirekten Bestimmung der beim Betätigungsvorgang auftretenden Kräfte anhand von Motorkenngrößen) eine die Ähnlichkeit von Kurvenverläufen bzw. Funktionen charakterisierende Vektordistanz herangezogen, d.h. ein Maß für die Übereinstimmung der Gesamtkraft und damit der Reibkraft bzw. des Reibkraftverlaufs aus mehreren (aus mindestens zwei) zeitlich nacheinander erfolgenden Betätigungsvorgängen. Diese Vektordistanz und damit das Gütemaß kann unabhängig vom Betätigungsweg des Betätigungsvorgangs (global bzw, positionsunabhängig) anhand von den gesamten Betätigungsvorgang charakterisierender Konzepte bestimmt werden (bsp. mittels Euklid-Distanzen) oder abhängig vom Betätigungsweg des Betätigungsvorgangs anhand von Bereichen des Betätigungsvorgangs charakterisierender Konzepte (bsp. mittels Tschebytscheff-Distanzen) oder abhängig vom Betätigungsweg des Betätigungsvorgangs anhand den jeweiligen Betätigungsweg charakterisierender positionsabhängiger Konzepte (bsp. mittels positiver Distanzmaße wie der Betragsdistanz, der mittleren Abstände; der maximalen quadratischen Abstände etc.). Mit dieser Vektordistanz wird unter Berücksichtigung des nicht-reproduzierbaren Anteils der Reibkraft das (bsp. positionsabhängige) Gütemaß ermittelt, mit dem eine Anpassung des Auslöseschwellwerts als Kriterium für den Einklemmschutz realisiert wird, insbesondere wo möglich eine Kraftbegrenzung der elektrischen Antriebseinheit durch eine Absenkung des Auslöseschwellwerts ermöglicht wird.

Die Anzahl der für die Bestimmung des Gütemaßes herangezogenen zurückliegenden Betätigungsvorgänge und deren jeweilige Gewichtung wird insbesondere in Abhängigkeit der gewünschten Genauigkeit für die Bestimmung des Gütemaßes und der Betriebsbedingungen während des aktuellen Betätigungsvorgangs vorgegeben; bsp. können alle betrachteten zurückliegenden Betätigungsvorgänge in einem Vektor repräsentiert werden, der mit dem anhand des Reibkraftverlaufs des aktuellen Betätigungsvorgangs ermittelten aktuellen Vektor verglichen wird. Insbesondere können auch zeitliche Einflüsse (bsp. die Zeitdifferenzen zwischen den verschiedenen Betätigungsvorgängen) und Tempereinflüsse (bsp. die Absoluttemperatur der Antriebseinheit während des Betätigungsvorgangs) bei der Bildung der Vektordistanz und damit bei der Bestimmung des Gütemaßes mit berücksichtigt werden.

Da das Gütemaß einen Indikator für den aktuellen Zustand der elektrischen Antriebseinheit auch unter Berücksichtigung des nicht-reproduzierbaren Anteils der Reibkraft darstellt, kann der Auslöseschwellwert als Grundlage für die Realisierung eines Einklemmschutzes bei jedem Betätigungsvorgang auf den aufgrund der Randbedingung Unterschreiten der maximalen Klemmkraft jeweils vertretbaren Wert eingestellt werden; d.h. es kann bei jedem Betätigungsvorgang ein effizienter und an die momentanen Betriebsbedingungen der elektrischen Antriebseinheit angepaßter Einklemmschutz mit einer hohen Zuverlässigkeit und damit ein großer Betriebsbereich der elektrischen Antriebseinheit ohne Einschränkungen realisiert werden.

Im Zusammenhang mit der Zeichnung soll das Verfahren anhand eines Ausführungsbeispiels erläutert werden.

Hierbei zeigt

Figur 1     den zeitlichen Verlauf verschiedener Kräfte während eines Betätigungsvorgangs der elektrischen Antriebseinheit,

Figur 2     den positionsabhängigen Verlauf der Reibkraft während verschiedener Betätigungsvorgänge der elektrischen Antriebseinheit,

Figur 3     einen Einklemfall mit dem zeitlichen Verlauf verschiedener Kräfte.

Eine elektrische Antriebseinheit ist bsp. zur Realisierung der elektrischen Fensterheberfunktion eines Kraftfahrzeugs (als Fensterheberantrieb eines Kraftfahrzeugs) mit einem permanenterregten Gleichstrommotor als Elektromotor, einem auf den Elektromotor aufgesetzten Getriebe, Seilzügen zur Betätigung der Fensterscheibe und einem im Türsteuergerät des Kraftfahrzeugs integrierten Elektronikmodul realisiert. Weiterhin sind Sensoren zur Erfassung der Motorspannung und des Ankerstroms des Elektromotors vorgesehen; bsp. können hierzu zu anderen Zwecken bereits im Elektromotor vorgesehene Sensoren eingesetzt werden. Der permanenterregte Gleichstrommotor als Elektromotor dieser elektrischen Antriebseinheit besitzt eine Nennleistung von bsp. 100 W; für die elektrische Antriebseinheit ist eine maximale Klemmkraft von bsp. 100 N zulässig.

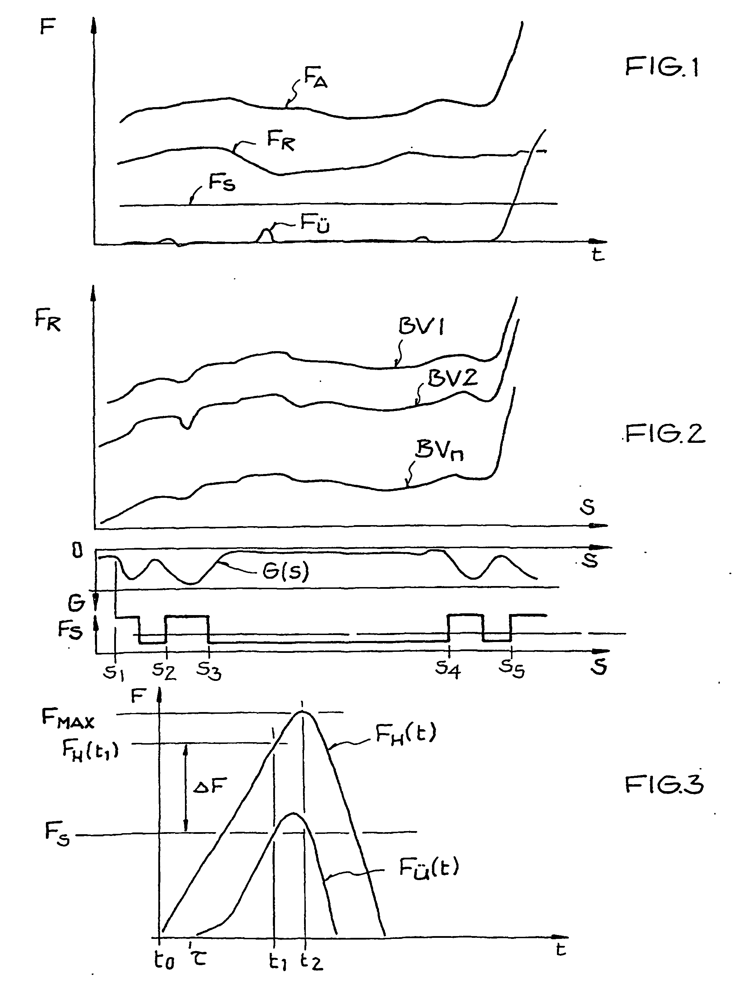

Gemäß der Figur 1 werden die während eines Betätigungsvorgangs indirekt bsp. anhand von Motorkenngrößen ermittelten Kräfte zur Realisierung eines Einklemmschutzes herangezogen. Hierzu wird die Antriebskraft $F_A(t)$ der elektrischen Antriebseinheit fortlaufend indirekt durch Auswertung der Motorkenngrößen Motorstrom und Motordrehzahl (bzw. Periodendauer) des Elektromotors ermittelt. Diese aktuell ermittelte Antriebskraft $F_A(t)$ wird zu der bsp. aufgrund zurückliegender Betätigungsvorgänge erwarteten Reibkraft $F_R(t)$ in Bezug gesetzt, d.h. es wird die Überschußkraft $F_0(t) = F_A(t) - F_R(t)$ gebildet, die angibt, um wieviel die tatsächliche Antriebskraft von der zum Betrieb der elektrischen Antriebseinheit eigentlich erforderlichen Antriebskraft abweicht. Falls die Überschußkraft $F_0(t) = F_A(t) - F_R(t)$ den Auslöseschwellwert $F_S$ überschreitet, wird angenommen, daß sich ein Hindernis in der elektrischen Antriebseinheit befindet (bsp. beim elektrischen Fensterheberantrieb eines Kraftfahrzeugs eine Hand zwischen Fensterscheibe und Rahmen), woraufhin geeignete Maßnahmen eingeleitet werden (Reversieren, Anhalten der elektrischen Antriebseinheit), um ein Einklemmen zu vermeiden.

Wie aus Figur 1 ersichtlich, ist die Auslegung des Auslöseschwellwerts $F_S$ kritisch, da an sich widersprüchliche Bedingungen erfüllt werden müssen: einerseits soll der Einklemmschutz robust gegen Änderungen der Reibkraft $F_R$ auch bei extremen Umweltbedingungen funktionieren (also keine fehlerhaften Bewertungen hinsichtlich des Einklemmens zulassen), andererseits darf eine maximale Klemmkraft (bsp. 100 N) nicht überschritten werden; der Auslöseschwellwert $F_S$ muß aufgrund der ersten Bedingung größer sein als der nicht-reproduzierbare Anteil der Reibkraft $F_R$ aus zwei aufeinanderfolgenden Bewegungsvorgängen (der bsp. durch ausgelaufene Führungen oder Witterungsänderungen herrührt), muß aufgrund der zweiten Bedingung aber so niedrig sein, daß die maximale Klemmkraft möglichst nie überschritten wird und solte daher deutlich unter der maximalen Klemmkraft liegen, weil nach dem Abschalten oder Reversieren (Umschalten) der elektrischen Antriebseinheit aufgrund der Trägheit des Elektromotors dieser noch eine bestimmte Zeit in die ursprüngliche Richtung weiterläuft.

Erfindungsgemäß wird durch die fortlaufende Bestimmung eines Gütemaßes G für die Reproduzierbarkeit der adaptierten Reibkraft $F_R$ der (bsp. indirekte) Einklemmschutz verbessert. Zur Bestimmung des Gütemaßes G wird gemäß der Figur 2 der vom Betätigungsweg s abhängige (positionsabhängige) und damit auch zeitlich abhängige Verlauf der Reibkraft $F_R(s)$ der elektrischen Antriebseinheit für n verschiedene aufeinanderfolgende Betätigungsvorgänge BV (BV1, BV2, BVn) herangezogen, d.h. der Reibkraftverlauf $F_{R1}(s)$, $F_{R2}(s)$, ..... $F_{Rn}(s)$; bsp. werden neben dem aktuellen Betätigungsvorgang BV1 mit dem Reibkraftverlauf $F_{R1}(s)$ noch 5 zurückliegende Betätigungsvorgänge BV2 bis BV6 mit dem Reibkraftverlauf $F_{R2}(s)$ ...... $F_{R4}6(s)$ zur Bestimmung des Gütemaßes G herangezogen. Daraus können bsp. mittels der Betragsdistanz als Distanzmaß positive Vektordistanzen ermittelt werden, aus denen ein von der Position der elektrischen Antriebseinheit und damit vom Betätigungsweg s abhängiges Gütemaß G(s) abgeleitet wird:

$$G(s) = -\Sigma |F_{R1}(s) - F_{Rn}(s)| \qquad (1)$$

Im Idealfall, d.h. bei reproduzierbarer Reibkraft $F_R$, ist das Gütemaß $G(s)=0$ (Übereinstimmung des Reibkraftverlaufs bei allen Betätigungsvorgängen BV); bei schlecht reproduzierbarer Reibkraft $F_R$ ist das Gütemaß G(s) negativ (signifikante Abweichung des Reibkraftverlaufs bei verschiedenen Betätigungsvorgängen BV). Falls das Gütemaß G(s) an einer bestimmten Position des Betätigungswegs s in der Nähe des Maximalwertes 0 liegt (bsp. Position $s_3$), wird der Auslöseschwellwert $F_S$ reduziert, um niedrigere maximale Klemmkräfte zu erhalten. Falls das Gütemaß G(s) an einer bestimmten Position des Betätigungswegs s stark negative Werte annimmt (bsp. Positionen $s_1$, $s_2$, $s_4$, $s_5$), wird der Auslöseschwellwert $F_S$ lokal erhöht, um die Wahrscheinlichkeit von Detektionsfehlern zu minimieren, wie sie bei elektrischen Fensterhebern bsp. in der Nähe der Dichtschließposition oder bei Scherenhebern an der Umkehrposition des Hebelmechanismus gehäuft auftreten. Hierdurch kann ein an jede elektrische Antriebseinheit individuell angepaßter positionsabhängiger Auslöseschwellwert $F_S$ realisiert werden.

Durch Gewichtung der gemäß Gleichung (1) definierten Vektordistanzen mit einer Gewichtungsfunktion w(n,s), die sowohl vom jeweiligen Betätigungsvorgang BV (und damit von dessen Aktualität) als auch vom Betätigungsweg s innerhalb des jeweiligen Betätigungsvorgangs BV abhängt, erhält man ein verbessertes Gütemaß G(s) für die Reproduzierbarkeit der adaptierten Reibkräfte über dem Betätigungsweg s:

$$G(s) = -\Sigma \, |F_{R1}(s) - F_{Rn}(s)| \cdot w(n,s) \qquad (2)$$

Die Gewichtungsfunktion w(n,s) ist bsp. als Produkt $w(n) \cdot w(s)$ aus einem vom Betätigungsvorgang BV abhängigen Anteil w(n) und einem vom Betätigungsweg s abhängigen Anteil w(s) definiert. Der vom Betätigungsweg s abhängige Anteil w(s) ist bsp. für alle Betätigungsvorgänge BV gleich; bsp. ist für den gesamten Betätigungsweg s w(s) = 1, außer im Bereich der Schließposition (der Dichtung) des beweglichen Teils, wo bsp. w(s) = 0.1 vorgegeben wird (d.h. dieser Bereich des Betätigungswegs s wird nur geringfügig berücksichtigt). Der vom Betätigungsvorgang BV abhängige Anteil w(n) enthält bsp. eine zeitliche Gewichtung, insbesondere bezüglich der Aktualität des jeweiligen Betätigungsvorgangs BV; bsp. ist für den vorherigen Betätigungsvorgang BV w(n) = 1 und für die zeitlich weiter zurückliegenden Betätigungsvorgänge BV w(n) entsprechend geringer, wobei bsp. bei Heranziehen von 5 zurückliegenden Betätigungsvorgängen BV für den letzten noch herangezogenen Betätigungsvorgang BV bsp. w(n) = 0.1 vorgegeben wird - insbesondere kann im Anteil w(n) auch die. (absolute) Zeitdifferenz zwischen den einzelnen Betätigungsvorgängen BV und die Temperatur während des jeweiligen Betätigungsvorgangs BV mit berücksichtigt werden.

Gemäß der Figur 3 ist ein Einklemmen mit den zugehörigen Kraftverläufen dargestellt, d.h. bei einer elektrischen Antriebseinheit mit der (näherungsweise konstanten) Geschwindigkeit v wird ab dem Zeitpunkt $t_0 = 0$ ein Hindernis mit der Elastizität D eingeklemmt. Beim Einklemmen entsteht eine Kraft im Hindernis $F_H$(t) von:

$$F_H(t) = D \cdot v \cdot (t - t_0) = D \cdot v \cdot t$$

Die (indirekt bestimmte) Überschußkraft $F_0$(t) ergibt sich zu:

$$F_0(t) = F_H(t) - F_R(t) = D \cdot v \cdot (t - \tau);$$

$\tau$ ist die Verzögerungszeit aufgrund der Trägheit der elektrischen Antriebseinheit (des Elektromotors) bei der indirekten Bestimmung der Überschußkraft $F_0$.

Zwischen der Kraft im Hindernis $F_H$(t) und der Überschußkraft $F_0$(t) besteht somit eine Differenzkraft $\Delta F$ als Maß für die Auswirkung des Kraftanstiegs auf das Hindernis:

$$\Delta F = F_H(t) - F_0(t) = D \cdot v \cdot \tau.$$

Bei typischen Werten der Verzögerungszeit $\tau$ von 20 ms, bei einer Elastizität D von bsp. 20 N/mm und einer Geschwindigkeit v der elektrischen Antriebseinheit von bsp. 120 mm/s ergibt sich bsp. eine Differenzkraft $\Delta F$ von 48 N.

Der nicht-reproduzierbare Anteil der Reibkraft $F_R$(t) beträgt im ungünstigsten Falle ("worst-case") bsp. 20 N, so daß auch der Auslöseschwellwert $F_S$ mindestens 20 N betragen muß (ansonsten würde bereits aufgrund von systemimmanenten Effekten, bsp. unterschiedlicher Schwergängigkeit etc., ein Einklemmen angenommen). Zum Zeitpunkt $t_1$, an dem die Überschußkraft $F_0$ den Auslöseschwellwert $F_S$ erreicht ($F_0(t_1) = F_S$), ist die Kraft im Hindernis $F_H$ um die Differenzkraft $\Delta F$ größer als die Überschußkraft $F_0(t_1)$ bzw. der Auslöseschwellwert $F_S$. Aufgrund dessen beträgt zum Zeitpunkt $t_1$ die Kraft im Hindernis $F_H$ bereits

$$F_H(t_1) = F_S + \Delta F = 20 \text{ N} + 48 \text{ N} = 68 \text{ N}.$$

Zum Zeitpunkt $t_1$ werden Gegenmaßnahmen eingeleitet, bsp. wird der Elektromotor und damit die elektrische Antriebseinheit reversiert. Aufgrund der Trägheit der elektrischen Antriebseinheit, insbesondere des Elektromotors, steigt die Kraft im Hindernis $F_H$(t) bis zum Zeitpunkt $t_2$ an, d.h. zum Zeitpunkt $t_2$ wird die maximale Kraft $F_{MAX}$ erreicht (bsp. $F_{MAX}$ = 90 N). Somit wird die Forderung nach einer maximalen Klemmkraft $F_{MAX}$ im Hindernis beim Einklemmen von höchstens 100 N zwar erfüllt, die Differenz zwischen der maximalen Klemmkraft $F_{MAX}$ von 90 N und den zulässigen 100 N (der "Sicherheitsabstand") beträgt jedoch nur 10 N.

Falls das Gütemaß G (und damit die Reproduzierbarkeit der Reibkraft $F_R$) an der zum Zeitpunkt $t_0$ eingenommenen Position bzw. beim zum Zeitpunkt $t_0$ zurückgelegten Betätigungsweg s der elektrischen Antriebseinheit die zuläßt, wird der Auslöseschwellwert $F_S$ an dieser Position auf einen geringeren Wert abgesenkt (bsp. von 20 N auf 10 N); hierdurch wird beim Einklemmen auch die Kraft im Hindernis $F_H$ und insbesondere die maximale Klemmkraft $F_{MAX}$ reduziert, gemäß obigem Beispielsfall von $F_{MAX}$ = 90 N auf $F_{MAX}$ = 65 N, und somit der "Sicherheitsabstand" vergrößert, gemäß obigem Beispielsfall von 10 N auf 35 N.

**Patentansprüche**

1. Verfahren zum Betrieb einer elektrischen Antriebseinheit, bei dem ein Einklemmschutz durch Vergleich der Überschußkraft ($F_{Ü}$) als Differenz zwischen der Antriebskraft ($F_A$) und der Reibkraft ($F_R$) mit einem Auslöseschwellwert ($F_S$) realisiert wird, **dadurch gekennzeichnet,**
   **daß** der vom Betätigungsweg (s) der elektrischen Antriebseinheit abhängige Verlauf der Reibkraft ($F_R$) des aktuellen Betätigungsvorgangs (BV1) mit dem Verlauf der Reibkraft ($F_R$) mindestens eines zurückliegenden Betätigungsvorgangs (BV2 .... BVn) verglichen wird,
   und **daß** der Auslöseschwellwert ($F_S$) in Abhängigkeit der Übereinstimmung der Verläufe der Reibkraft ($F_R$) des aktuellen Betätigungsvorgangs (BV1) und mindestens eines zurückliegenden Betätigungsvorgangs (BV2 .... BVn) verändert wird.

2. Verfahren nach Anspruch 1, **dadurch gekennzeichnet, daß** ein Gütemaß (G) als Maß für die Übereinstimmung der Verläufe der Reibkraft ($F_R$) des aktuellen Betätigungsvorgangs (BV1) und mindestens eines zurückliegenden Betätigungsvorgangs (BV2 .... BVn) definiert wird.

3. Verfahren nach Anspruch 2, **dadurch gekennzeichnet, daß** das Gütemaß (G) anhand von die Korrelation zwischen verschiedenen Kurvenverläufen charakterisierenden Vektordistanzen bestimmt wird.

4. Verfahren nach Anspruch 3, **dadurch gekennzeichnet, daß** zur Bestimmung der Vektordistanzen vom Betätigungsweg (s) abhängige Distanzmaße herangezogen werden.

5. Verfahren nach Anspruch 3, **dadurch gekennzeichnet, daß** zur Bestimmung der Vektordistanzen bestimmte Bereiche des Betätigungswegs (s) zusammenfassende Distanzmaße herangezogen werden.

6. Verfahren nach Anspruch 3, **dadurch gekennzeichnet, daß** zur Bestimmung der Vektordistanzen vom Betätigungsweg (s) unabhängige Distanzmaße herangezogen werden.

7. Verfahren nach einem der Ansprüche 2 bis 6, **dadurch gekennzeichnet, daß** das Gütemaß (G) als Produkt der Vektordistanzen mit einer Gewichtungsfunktion (w(n,s)) definiert wird.

8. Verfahren nach Anspruch 7, **dadurch gekennzeichnet, daß** der Gewichtungsfunktion (w(n,s)) ein vom jeweiligen Betätigungsvorgang (BV) abhängiger Anteil und ein vom Betätigungsweg (s) des jeweiligen Betätigungsvorgangs (BV) abhängiger Anteil zugeordnet wird.

9. Verfahren nach Anspruch 7 oder 8, **dadurch gekennzeichnet, daß** der vom jeweiligen Betätigungsvorgang (BV) abhängige Anteil der Gewichtungsfunktion (w(n,s)) abhängig von der Zeitdifferenz zwischen den einzelnen Betätigungsvorgängen (BV) vorgegeben wird.

10. Verfahren nach einem der Ansprüche 7 bis 9, **dadurch gekennzeichnet, daß** der vom jeweiligen Betätigungsvorgang (BV) abhängige Anteil der Gewichtungsfunktion (w(n,s)) abhängig von der Temperatur des jeweiligen Betätigungsvorgangs (BV) vorgegeben wird.

11. Verfahren nach einem der Ansprüche 7 bis 10, **dadurch gekennzeichnet, daß** der vom Betätigungsweg (s) des jeweiligen Betätigungsvorgangs (BV) abhängige Anteil für alle Betätigungsvorgänge (BV) gleich vorgegeben wird.

12. Verfahren nach einem der Ansprüche 7 bis 11, **dadurch gekennzeichnet, daß** bestimmte Bereiche des Betätigungswegs (s) bei der Gewichtungsfunktion (w(n,s)) nicht berücksichtigt werden.

13. Verfahren nach einem der Ansprüche 1 bis 12, **dadurch gekennzeichnet, daß** die Überschußkraft (Fo) indirekt aus Motorkenngrößen bestimmt wird.

14. Verfahren nach Anspruch 13, **dadurch gekennzeichnet, daß** als Motorkenngrößen der Motorstrom (I) und/oder die Motorspannung (U) und/oder die Motordrehzahl (n) herangezogen werden.

**Claims**

1. Method for operating an electric drive unit, wherein protection against getting jammed is achieved by comparing the excess force ($F_{Ü}$) as a difference between the motive force ($F_A$) and the frictional force ($F_R$) with a tripping limit value ($F_S$),
   **characterized in that**
   the course of the frictional force ($F_R$) of the current actuating process (BV1) is compared with the course of the frictional force ($F_R$) of at least one previous actuating process (BV2 .... BVn), wherein the course of the frictional force ($F_R$) of the current actuating process (BV1) is dependent on the actuating path (s) of the electric drive unit,
   and that the tripping limit value ($F_S$) is changed depending on the correspondence of the courses of the frictional force ($F_R$) of the current actuating process (BV1) and of at least one previous actuating process (BV2 .... BVn).

2. Method according to claim 1, **characterized in that** a measure of quality (G) is defined as a measure of the correspondence of the courses of the frictional force ($F_R$) of the current actuating process (BV1) and of at least one previous actuating process (BV2 .... BVn).

3. Method according to claim 2, **characterized in that** the measure of quality (G) is determined on the basis of vector distances which characterize the correlation between different curve courses.

4. Method according to claim 3, **characterized in that** distance measures dependent on the actuating path (s) are used for determining the vector distances.

5. Method according to claim 3, **characterized in that** distance measures combining specific portions of the actuating path (s) are used for determining the vector distances.

6. Method according to claim 3, **characterized in that** distance measures independent of the actuating path (s) are used for determining the vector distances.

7. Method according to any one of claims 2 to 6, **characterized in that** the measure of quality (G) is defined as a product of the vector distances with a weighting function (w(n,s)).

8. Method according to claim 7, **characterized in that** a proportion dependent on the respective actuating process (BV) and a proportion dependent on the actuating path (s) of the respective actuating process (BV) are assigned to the weighting function (w(n,s)).

9. Method according to claim 7 or 8, **characterized in that** the proportion of the weighting function (w(n, s)) dependent on the respective actuating process (BV) is predetermined depending on the time difference between the individual actuating processes (BV).

10. Method according to any one of claims 7 to 9, **characterized in that** the proportion of the weighting function (w(n,s)) dependent on the respective actuating process (BV) is predetermined depending on the temperature of the respective actuating process (BV).

11. Method according to any one of claims 7 to 10, **characterized in that** the proportion dependent on the actuating path (s) of the respective actuating process (BV) is identically predetermined for all actuating processes (BV).

12. Method according to any one of claims 7 to 11, **characterized in that** specific portions of the actuating path (s) are not taken into consideration with respect to the weighting function (w(n,s)).

13. Method according to any one of claims 1 to 12, **characterized in that** the excess force ($F_{\ddot{U}}$) is indirectly determined on the basis of motor parameters.

14. Method according to claim 13, **characterized in that** the motor parameters taken into consideration are the motor current (I) and/or the motor voltage (U) and/or the motor speed (n).

**Revendications**

1. Procédé de mise en oeuvre d'une unité d'entraînement électrique dans lequel une protection contre le coincement est réalisée par la comparaison de la force excessive ($F_{\ddot{u}}$), en tant que différence entre la force d'entraînement ($F_A$) et la force de frottement ($F_R$), avec une valeur de seuil de déclenchement ($F_s$),
**caractérisé en ce que**
l'allure, dépendant de la course d'actionnement (s) de l'unité d'entraînement électrique, de la force de frottement ($F_R$) du processus d'actionnement actuel (BV1) est comparée à l'allure de la force de frottement ($F_R$) d'au moins uri processus d'actionnement passé (BV2 ... BVn),
et **en ce que** la valeur de seuil de déclenchement ($F_s$) est modifiée en fonction de la coïncidence des allures de la force de frottement ($F_R$) du processus d'actionnement actuel (BV1) et d'au moins un processus d'actionnement passé (BV2 ... BVn).

2. Procédé selon la revendication 1, **caractérisé en ce qu'**une mesure de qualité (G) est définie comme mesure de la coïncidence des allures de la force de frottement ($F_R$) du processus d'actionnement actuel (BV1) et d'au moins un processus d'actionnement passé (BV2 ... BVn)

3. Procédé selon la revendication 2, **caractérisé en ce que** la mesure de qualité est déterminée à l'aide de distances vectorielles caractérisant la corrélation entre différentes allures de courbes.

4. Procédé selon la revendication 3, **caractérisé en ce qu'**il est fait appel à des mesures de distance dépendant de la course d'actionnement (s) pour déterminer les distances vectorielles.

**5.** Procédé selon la revendication 3, **caractérisé en ce qu'**il est fait appel à des mesures de distance rassemblant certaines plages de la course d'actionnement (s) pour déterminer les distances vectorielles.

**6.** Procédé selon la revendication 3, **caractérisé en ce qu'**il est fait appel à des mesures de distance indépendantes de la course d'actionnement (s) pour déterminer les distances vectorielles.

**7.** Procédé selon une des revendications 2 à 6, **caractérisé en ce que** la mesure de qualité (G) est définie comme produit des distances vectorielles et d'une fonction de pondération (w(n,s)).

**8.** Procédé selon la revendication 7, **caractérisé en ce que**, à la fonction de pondération (w(n,s)) sont affectées une fraction dépendant de chaque processus d'actionnement (BV) et une fraction dépendant de la course d'actionnement (s) de chaque processus d'actionnement (BV).

**9.** Procédé selon la revendication 7 ou 8, **caractérisé en ce que** la fraction, dépendant de chaque processus d'actionnement (BV), de la fonction de pondération (w(n,s)) est prédéfinie en fonction de la différence temporelle entre les différents processus d'actionnement (BV).

**10.** Procédé selon une des revendications 7 à 9, **caractérisé en ce que** la fraction, dépendant de chaque processus d'actionnement (BV), de la fonction de pondération (w(n,s)) est prédéfinie en fonction de la température de chaque processus d'actionnement (BV).

**11.** Procédé selon une des revendications 7 à 10, **caractérisé en ce que** la fraction, dépendant de la course d'actionnement (s) de chaque processus d'actionnement (BV), est prédéfinie de façon égale pour tous les processus d'actionnement (BV).

**12.** Procédé selon une des revendications 7 à 11, **caractérisé en ce que** certaines plages de la course d'actionnement (s) ne sont pas prises en compte lors de la fonction de pondération (w(n,s)).

**13.** Procédé selon une des revendications 1 à 12, **caractérisé en ce que** la force excessive ($F_{ü}$) est déterminée indirectement à partir de grandeurs caractéristiques du moteur.

**14.** Procédé selon la revendication 13, **caractérisé en ce que**, en tant que grandeurs caractéristiques du moteur, il est fait appel au courant de moteur (I) et/ou à la tension de moteur (U) et/ou au régime du moteur (n).

FIG.1

FIG.2

FIG.3